# EUROPÄISCHE PATENTSCHRIFT

(11) **EP 1 606 523 B1**
(45) Veröffentlichungstag und Bekanntmachung des Hinweises auf die Patenterteilung: **29.04.2009**
(21) Anmeldenummer: 04721528.0
(22) Anmeldetag: 18.03.2004
(51) Int. Cl.: F16B 31/04, F16B 9/02, F16B 31/02

(54) **VERSPANNUNGSANORDNUNG MIT ÜBERSPANNUNGSSCHUTZ**
BRACING ARRANGEMENT COMPRISING OVERSTRAIN PROTECTION
SYSTEME DE MISE EN TENSION POURVU D'UN LIMITEUR DE TENSION

(30) Priorität: 18.03.2003 DE 10312011
(43) Veröffentlichungstag der Anmeldung: 21.12.2005
(73) Patentinhaber: P&S Vorspannsysteme AG, 8735 St. Gallenkappel (CH)
(72) Erfinder: SCHNEIDER, Norbert, CH-8730 Uznach (CH); PLOKE, Gerhard, CH-8735 Rüeterswill (CH)
(74) Vertreter: Schulze, Mark
(86) Internationale Anmeldenummer: PCT/EP2004/002854
(87) Internationale Veröffentlichungsnummer: WO 2004/083655

(56) Entgegenhaltungen:
- DE-C- 704 518
- US-A- 3 659 877
- US-A- 5 772 378

## Beschreibung

Die Erfindung bezieht sich auf eine Verspannungsanordnung mit Überspannungsschutz mit den oberbegrifflichen Merkmalen des Patentanspruchs 1 bzw. ein Verfahren zum Verspannen zweier zu verspannender Teile mittels einer Verschraubung mit den Merkmalen des Patentanspruchs 7.

Das Verspannen zweier zu verspannender Teile, z. B. eines Holms und eines Trägers mit Hilfe einer Schraubverbindung ist allgemein bekannt. Problematisch sind derartige Verbindungen dann, wenn die beiden zu verspannenden Teile z.B. ein Rahmenelement und ein Oberholm einer Pressenanordnung sind, welche bei einer Fehlfunktion der Presse bei einer die beiden zu verspannenden Elemente auseinander treibenden Kraft überbelastet werden, was dann zu einer Verformung dieser zu verspannenden Elemente oder anderer Elemente der Pressenanordnung führt.

Allgemein bekannt sind Kraftsensoren in Hydraulikleitungen, welche einen zu großen Anstieg der Druckverhältnisse in hydraulischen Leitungen zum Betreiben einer Pressenanordnung erfassen, so dass in einem solchen Fall ein Nothalt ausgelöst wird. Derartige Kontrollsysteme auf hydraulischer Basis sind jedoch zu träge, um einen schnellen Kraftanstieg rechtzeitig zu erfassen, wie er beispielsweise beim Einsatz von Keramik- und Metallpulverpressen im Falle einer Fehlfunktion auftreten kann.

DE 704 518 C beschreibt eine Verspannungsanordnung mit einem ersten zu verspannenden Element, mit einem zweiten zu verspannenden Element, das gegen das erste zu verspannende Element verspannt ist, mit einem Spannbolzen zum Verspannen, mit einer Hülse, welche mit dem Spannbolzen gegen das zweite zu verspannende Element gespannt ist und welche durch das erste zu verspannende Element hindurchführt, und mit einer Hülsenspanneinrichtung, welche mit der Hülse in Eingriff steht und das erste zu verspannende Element gegen das zweite zu verspannende Element spannt. Bei dieser Anordnung wird zum Erzielen einer optimierten Kraftübertragung und zum Vermeiden einer Beschädigung bei Überbelastung eine Kraft kaskadenartig und gleichmäßig drückend über die Hülse und über den Spannbolzen geleitet. Im Fall einer Überbelastung soll eine andauernde Verformung von Gewindekämmen dieser Anordnung zuerst im Gewinde des größeren Durchmessers stattfinden.

Die Aufgabe der Erfindung besteht darin, einen Überspannungsschutz für eine Verschraubung zweier miteinander zu verschraubender Elemente vorzuschlagen. Der Überspannungsschutz soll sicherstellen, dass im Fall einer Überspannung keine anderen mittels der Verschraubung miteinander verbundenen Maschinenelemente beschädigt werden und aufwändige Reparaturen vermieden werden können.

Diese Aufgabe wird durch eine Verspannungsanordnung mit Überspannungsschutz mit den Merkmalen des Patentanspruchs 1 bzw. ein Verfahren mit den Merkmalen des Patentanspruchs 7 gelöst. Vorteilhafte Ausgestaltungen sind Gegenstand abhängiger Ansprüche.

Im Normalbetrieb geht der Kraftfluss bzw. die Betriebslast effektiv nur durch die Hülse, die Hülsenspanneinrichtung und die beiden zu verspannenden Elemente hindurch. Im Überlastfall fließt der Kraftfluss effektiv nur durch den Spannbolzen und durch die beiden zu verspannenden Elemente hindurch und führt dann zum Sollbruch des Spannbolzens, so dass keine anderen Maschinenelemente beschädigt werden und aufwändige Reparaturen vermieden werden können. Die Differenz der Verspannkräfte des Spannbolzens und der Hülsenverspanneinrichtung bestimmt die Hülsenentlastung bzw. die Abhebegrenze der Hülse. Somit lässt sich die Bruchlast weitgehend unabhängig von den Werkstoffkennwerten einstellen.

Bei der Verspannungsanordnung bzw. dem Verfahren zum Verspannen zweier zu verspannender Elemente wird somit eine mit Blick auf die Steifigkeit bzw. Nachgiebigkeit des Spannbolzens gegenüber der mit dem Spannbolzen gegen das zweite zu verspannende Element vorgespannten Hülse ausgenutzt, wobei die vorgespannte Hülse mit Hilfe der Hülsenspanneinrichtung zum Verspannen der beiden zu verspannenden Elemente wieder bis auf einen Restbetrag entlastet wird. Unter Spannbolzen wird auch jegliches gleichwirkende Element verstanden. Selbiges gilt für die Hülse, wobei beide Spannbolzen und Hülse insbesondere nicht auf Bauelemente mit kreisrundem oder zylindrischem Querschnitt beschränkt sind. Auch ovale, eckige und quadratische Querschnitte sind gemäß weiterer Ausführungsvarianten einsetzbar.

Zum Verspannen werden Schraubgewinde bevorzugt, jedoch sind auch beliebige andere Spanneinrichtungen einsetzbar, z.B. auch Feder- und Sprengringe oder reibschlüssige Verbindungen. Mit Blick auf die Verspannung in den Verspannungszustand kann der Spannbolzen vorteilhafterweise bis zu einem vorgegebenen Spannmaß an seine Streckgrenze beansprucht werden, wobei das Spannmaß je nach erforderlicher Toleranz für die entsprechenden Anwendungszwecke geeignet wählbar ist. Entsprechendes gilt für das vorgegebene Entlastungsmaß, bis zu dem die Hülse mit Hilfe der Hülsenspanneinrichtung entlastet wird. Idealerweise werden dabei Spannmaß und Entlastungsmaß aufeinander abgestimmt. Die Betriebskraftgrenze wird letztendlich abhängig von dem Verhältnis von Spannmaß und Entlastungsmaß und insbesondere der Elastizitätsverhältnisse von Spannbolzen und Hülse bestimmt. Je nach Anwendungsgebiet ist dabei die Betriebskraftgrenze mehr oder weniger oberhalb der üblichen Betriebskraft anzusetzen. Für Einrichtungen mit üblicherweise nahezu konstanter Betriebskraft und einem nur geringen Toleranzmaß werden das Entlastungsmaß und der Abstand von Betriebskraftgrenze zur Betriebskraft gering gewählt. Für Anordnungen, bei denen die Betriebskraft innerhalb eines gewissen Toleranzmaßes schwankt, wird die Betriebskraftgrenze entsprechend höher gewählt. Entsprechend sind dann auch die Werte für das vorgegebene Entlastungsmaß und das vorgegebene Spannmaß mit einem größeren Toleranzbereich zu versehen.

Ein Ausführungsbeispiel der Erfindung wird nachfolgend anhand der Zeichnung näher erläutert. Es zeigen:
- Fig. 1: aus seitlicher Ansicht zwei mittels einer Verschraubung miteinander verspannte Elemente;
- Fig. 2: eine seitliche Teilschnittansicht durch diese Anordnung; und
- Fig. 3: ein Kraftflussdiagramm zur Veranschaulichung von Dehn- und Stauchverhalten verschiedener Einzelelemente dieser Anordnung bei der Verspannung.

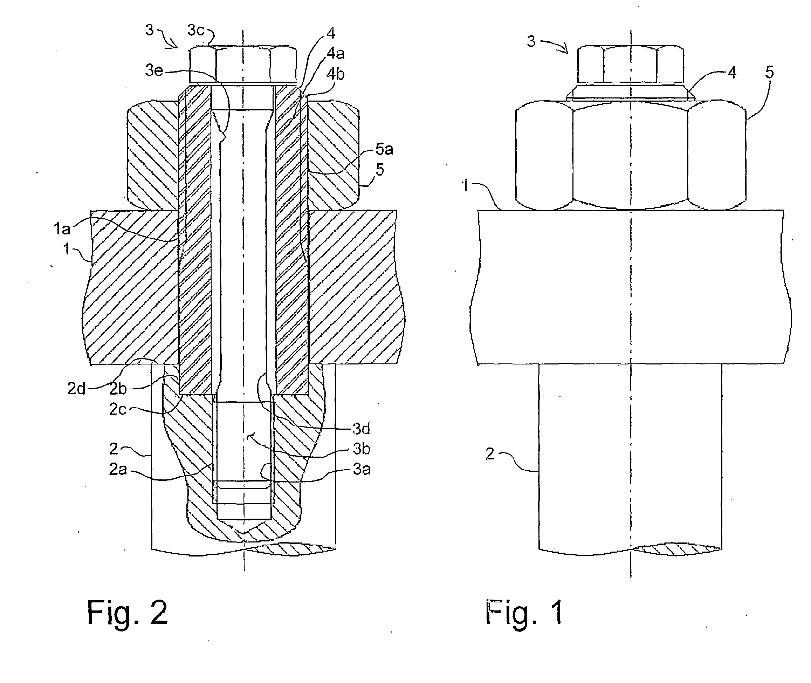

Wie dies aus den Fig. 1 und 2 ersichtlich ist, werden zwei zu verspannende Elemente 1, 2 mittels einer Schraubverbindung miteinander verspannt. Die beiden zu verspannenden Elemente 1, 2 sind beispielsweise ein Holm 1 und ein Träger 2 und werden nachfolgend zur einfacheren Unterscheidbarkeit als solche bezeichnet.

Die Anordnung zum Verspannen des Holms 1 und des Trägers 2 besteht im Wesentlichen aus einem Schraubbolzen 3, welcher eine Hülse 4 gegen den Träger 2 verspannt, und aus einer Spannmutter 5, welche in Gewindeeingriff auf der Hülse 4 sitzt und zum Verspannen des Holms 1 gegen den Träger 2 angeordnet ist. ,

Der Träger 2 weist dazu eine von dessen Oberfläche 2d in diesen führende Bohrung mit einem Innengewinde 2a auf. Das Innengewinde 2a dient zur Aufnahme eines Außengewindes 3a im vorderseitigen Bereich eines Schafts 3b des Schraubbolzens 3. Am gegenüberliegenden Ende weist der Schraubbolzen 3 in üblicher Art und Weise einen Spannkopf 3c auf, dessen Außendurchmesser größer als der des Schafts 3b ist.

In der zusammengesetzten Anordnung führt der Schaft 3b des Schraubbolzens 3 durch die Hülsenbohrung 4a der Hülse 4 hindurch. Mit Hilfe des Spannkopfs 3c wird die Hülse 4 gegen die Oberfläche 2c des Trägers 2 verspannt. Zur Erzielung einer besseren Führungsstabilität ist der Bereich der Oberfläche 2c des Trägers 2 zum Abstützen der Hülse 4 gemäß bevorzugter Ausführungsform gegenüber der sonstigen Oberfläche 2d des Trägers in Art einer aufgeweiteten Bohrung 2b abgesenkt.

Der Holm 1 weist eine Holmbohrung 1a auf, welche zur Durchführung der Hülse 4 dient. Zum Verspannen des Holms 1 mit dem Träger 2 weist die Hülse 4 in zumindest ihrem dem Spannkopf 3c zugewandten Endabschnitt ein Außengewinde 4b auf, welches in verspanntem Zustand mit der Spannmutter 5 in Eingriff steht. Durch Aufschrauben der Spannmutter 5 auf die Hülse 4 ist der Holm 1 in geeignetem Maß gegen den Träger 2 verspannt. Vorteilhafterweise ist der Außendurchmesser des Spannkopfs 3c so dimensioniert, dass die Spannmutter 5 über den Spannkopf 3c hinweg geführt und auf die Hülse 4 aufgeschraubt werden kann.

Der Schaft 3b des Schraubbolzens 3 weist vorteilhafterweise in dem Bereich zwischen dem vorderseitigen Außengewinde 3a und dem Spannkopf 3c eine Verjüngung 3d auf, die z.B. auch als Sollbruchbereich dienen kann.

Ein hervorzuhebendes Merkmal der Anordnung ist das Verhältnis der Steifigkeit bzw. der Nachgiebigkeit der einzelnen Komponenten zueinander. Diese hängen insbesondere von den Materialeigenschaften und der Geometrie der Komponenten ab.

Entscheidend ist dabei, dass der Schraubbolzen 3 nachgiebiger, vorzugsweise deutlich nachgiebiger als die Hülse 4 ist. Mit Blick auf den Träger 2 und den Holm 1 wird von im Wesentlichen steifen Materialien im Vergleich zu denen der Hülse 4 und des Schraubbolzens 3 ausgegangen. Die Hülse ist dabei insbesondere nachgiebiger als der Holm 1. Durch eine solche Elastizitätsvorgabe ist eine verhältnismäßig lange Wegänderung bzw. Längung des Schraubbolzens 3 mit einer vorgegebenen Kraftänderung verbunden, während im Verhältnis dazu eine relativ kürzere Wegänderung, insbesondere Stauchung der Hülse 4 mit einer im Verhältnis größeren Kraftänderung verbunden ist.

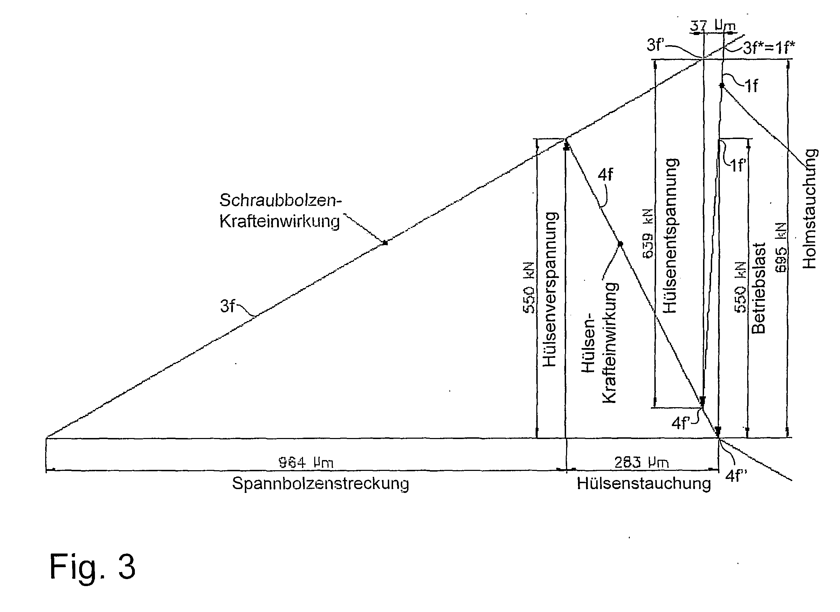

Anhand Fig. 3 wird der Kraft- und Längungs-/Stauchungsverlauf der einzelnen Komponenten beim Zusammenbau und Verspannen des Holms 1 an dem Träger 2 beschrieben. Die in Fig. 3 angegebenen Dimensionen sind typisch für den Einsatz bei Metallpulverpressen und dienen lediglich zur Veranschaulichung. Eine Übertragung des Prinzips auf gänzlich verschiedenartige Dimensionsverhältnisse und Größenordnungen ist prinzipiell möglich. Hülse 4 und Träger 2 verhalten sich aufgrund der hohen Vorspannung wie ein einziges Teil.

Zum Verspannen des Holms 1 an dem Träger 2 wird in einem ersten Schritt gemäß des besonders bevorzugten Verfahrensablaufs die Hülse 4 mit Hilfe des Schraubbolzens 3 an dem Träger 2 verspannt. Bei dem dargestellten Beispiel verlängert sich der Schaft 3b bei einer Vorspannung von ca. 550 kN um 964 µm, wobei das Kraftflussverhältnis durch die flach verlaufende Steigung 3f charakterisiert ist. Vorzugsweise wird der Schaft 3b der Schraube bzw. des Schraubbolzens 3 dabei oder gegebenenfalls bei den folgenden Schritten bis zu seiner Streckgrenze, d.h. dem Plastifizierungspunkt beansprucht.

In einem nächsten Schritt wird der Holm 1 mit Hilfe der Spannmutter 5, die in das Außengewinde 4b der Hülse 4 eingreift, gegen den Träger 2 verspannt. Die beispielhafte Vorspannkraft beträgt 639 kN. Durch das Vorspannen findet nunmehr eine Verlängerung bzw. Entspannung der beim vorherigen Schritt zusammengestauchten Hülse statt. Während die Hülse 4 zuvor um 283 µm gestaucht wurde, wird die Vorspannkraft der Spannmutter 5 so gewählt, dass die Hülse 4 nicht vollständig entspannt wird. Der Spannungsverlauf der Hülse 4 ist anhand der Kurve 4f dargestellt, welche entsprechend der hohen Steife im Vergleich zum Schraubbolzen 3 steiler als dessen Kurve 3f verläuft. Die Hülse 4 unterliegt nach dem Verspannen der Spannmutter 5 einer Rest-Spannkraft von beim dargestellten Beispiel 56 kN und ist bis auf einen verbleibenden Stauchweg von nur noch 37 µm gestaucht. Während der Entlastung der Hülse 4 wird der Spannbolzen 3 weiter gedehnt.

Bei den Kurvenverläufen wird zu Punkten 3f', 4f' ein innerer Kraftschluss zwischen dem Spannkopf 3c des Schraubbolzens 3, der Hülse 4 und dem Träger 2 einerseits und andererseits ein äußerer Kraftschluss zum Verspannen des Holms 1 am Träger 2 zwischen der Spannmutter 5, der Hülse 4, dem Holm 1 und dem Träger 2 aufgebaut. Äußerer und innerer Kraftschluss bewirken dabei, dass der Schraubbolzen 3 unter Zugspannung beansprucht ist, aber de facto keine effektive Last trägt. Zugleich ist die Hülse 4 bis auf eine Reststauchung von 37 µm entspannt.

In dieser Situation ist der Träger 2 mit der Hülse 4 so lange sehr steif verspannt, solange die Hülse 4 unter der Betriebslast des Holms 1 gegenüber dem Träger 2 nicht abhebt. Erst bei einer Betriebskraft von 550 kN, mit welcher der Holm 1 relativ vom Träger 2 weggedrückt wird, wird die Vorspannkraft der Hülse 4 zu null, so dass die Hülse 4 bei einer weiteren Betriebskraftsteigerung von dem Träger 2 abhebt. In diesem Moment trägt der Spann- bzw. Schraubbolzen 3 die gesamte Last. Das Zunehmen der Betriebskraft von Null auf 550 kN des Holms 1 gegenüber dem Träger 2 ist anhand der Kurve 1f für die Holmstauchung dargestellt. Diese verläuft entsprechend der noch größeren Steife des Holms 1 im Verhältnis zur Steife der Hülse 4 noch steiler als die Kurve 4f der Hülse 4. In der Darstellung ist somit bei Wirken der Kraft von 550 kN des Holms 1 gegenüber dem Träger 2 eine vollständige Entlastung der Hülse 4 erreicht, was durch die Kurvenpunkte 4f" , 1f' dargestellt ist. Dieser Zustand stellt den theoretischen Bruchpunkt dar, wenn der Schraubbolzen 3 im ersten Schritt bis tatsächlich zu seiner Streckgrenze beansprucht wurde.

Bei einer weiteren Zunahme der auf den Holm 1 wirkenden Kraft hebt die Hülse 4 von dem Träger 2 ab und der Schraubbolzen 3 wird weiter gedehnt, was zu seinem Bruch führt. Dargestellt ist der Bruchmoment durch die Punkte 1f*, 3f*. Gemäß einer ersten beispielhaften Berechnung wird die Bruchfestigkeit von ca. 639 kN des Schraubbolzens 3 bereits nach einem weiteren Dehnweg von 0,005 mm nach dem Entlasten der Hülse 4 erreicht. Die Formänderungsgeschwindigkeit und des Schraubbolzens 3 nach dem Abheben der Hülse 4 damit die Krafteinwirkung auf den Schraubbolzen 3 beträgt bei dem dargestellten Ausführungsbeispiel (630 - 550) kN / 0,005 mm = 17.800 kN/mm = 1.780 to/mm, so dass der Schraubbolzen 3 in der Praxis sofort bricht. Eine derart ausgeführte Überlastsicherung ist folglich überwiegend von der Geometrie und den inneren und äußeren Kräften abhängig, nicht aber von der Streubreite der Materialkennwerte.

Für den Einsatz der Verspannungsanordnung bzw. des Verfahrens zum Verschrauben zweier miteinander zu verspannender Elemente 1, 2 wird vorteilhafterweise eine Justierung für jeden Anwendungsfall vorgenommen, wobei sich praktische Bruchversuche anbieten. Nach einem Bruch braucht lediglich der gebrochene Schraubbolzen 3 ausgetauscht zu werden, um einen erneuten Bruchversuch vorzunehmen. Beim späteren Einsatz ist ebenso ein schneller Austausch eines Schraubbolzens 3 möglich, wenn tatsächlich eine Überbelastung der Gesamtanordnung aufgetreten ist und zu einem Bruch des Schraubbolzens 3 geführt hat.

Um den Schraubbolzen 3 nach einem Bruch mit möglichst geringem Aufwand austauschen zu können, wird vorteilhafterweise eine Sollbruchstelle 3e nahe des Spannkopfs 3c ausgebildet, so dass ein Bruch des Schraubbolzens 3 nicht nahe dem Gewindebereich 3a auftritt, was einen Austausch unnötig erschweren würde.

Soll eine größere Anzahl von derartigen Verspannungsanordnungen bei einem bestimmten Gesamtanordnungstyp vorgesehen werden, bietet sich auch eine einmalige Versuchsreihe zum Ermitteln geeigneter Spannverhältnisse an, woraufhin dann mit Hilfe einer Drehmomentvorgabe die Verspannung des Schraubbolzens 3 und der Hülse 4 an dem Träger 2 bzw. die Verspannung der Spannmutter 5 an der Hülse 4 zum Verspannen des Holms 1 gegenüber dem Träger 2 mit Hilfe einer Drehmomenteinstellung vorgenommen werden kann. Möglich ist alternativ oder zusätzlich der Einsatz von Kraftsensoren, beispielsweise einer Kraftdose, welche zwischen Spannmutter 5 und Holm 1 einsetzbar ist.

## Patentansprüche

1. Verspannungsanordnung mit Oberspannungsschutz mit
- einem ersten zu verspannenden Element (1),
- einem zweiten zu verspannenden Element (2), das gegen das erste zu verspannende Element (1) verspannt ist, und.
- einem Spannbolzen (3) zum Verspannen, wobei der Spannbolzen (3) bis zu einem vorgegebenen Spannmaß (3f') an seine Streckgrenze beansprucht ist,
- eine Hülse (4), welche mit dem Spannbolzen (3) gegen das zweite zu verspannende Element (2) gespannt ist und welche durch das erste zu verspannende Element (1) hindurchführt, und
- eine Hülsenspanneinrichtung (5), welche mit der Hülse (4) in Eingriff steht und das erste zu verspannende Element (1) gegen das zweite zu verspannende Element (2) spannt,
wobei
- der Spannbolzen (3) nachgiebiger als die Hülse (4) ist,
- - die Hülse (4) durch die Hülsenspanneinrichtung (5) bis auf ein vorgegebenes Entlastungsmaß (4f') entspannt ist und
- seine Überschreitung einer das erste und das zweite zu verspannende Element (1, 2) voneinander trennenden Betriebskraft über eine Betriebskraftgrenze hinaus zu einer vollständigen Entspannung der Hülse (4) relativ zu der Vorspannung durch den Spannbolzen (3) führt, und.
- die Entspannung der Hülse (4) zum nachfolgenden Sollbruch des Spannbolzens (3) führt.

2. Verspannungsanordnung nach Anspruch 1, bei der die Hülse (4) nachgiebiger als das erste zu verspannende Element (1) ist.

3. Verspannungsanordnung nach einem vorstehenden Anspruch, bei der der Spannbolzen (3) ein Schraubbolzen (3) mit einem Gewinde (3a) zum Einschrauben in eine Bohrung mit Innengewinde (2a) des zweiten zu verspannenden Elements (2) ist.

4. Verspannungsanordnung nach einem vorstehenden Anspruch, bei der die Hülse (4) ein Außengewinde (4b) zum Aufschrauben der ein Innengewinde (5a) tragenden Hülsenspanneinrichtung (5) aufweist.

5. Verspannungsanordnung nach einem vorstehenden Anspruch, bei der eine Sollbruchstelle (3e) am Spannbolzen (3) ausgebildet ist.

6. Verfahren zum Verspannen zweier zu verspannender Elemente (1, 2) mittels eines Spannbolzens (3), einer Hülse (4) und einer Hülsenspanneinrichtung (5), insbesondere mittels einer Verspannungsanordnung nach einem vorstehenden Anspruch, mit den Schritten:
- Verspannen der Hülse (4) mittels des Spannbolzens (3) gegen das zweite zu verspannende Element (2), wobei der Spannbolzen (3) die Hülse (4) staucht,
- Verspannen des ersten zu verspannenden Elements (1) an dem zweiten zu verspannenden Element (2) durch Verspannen mit der Hülsenspanneinrichtung (5), wobei die Hülsenspanneinrichtung (5) mit der durch die erste zu verspannende Einrichtung (1) hindurchragenden Hülse (4) derart in Spanneingriff tritt, dass die Hülse (4) bis zu einem vorgegebenen Entlastungsmaß (4f') gegenüber der vorherigen Stauchung entspannt wird,
- so dass eine das erste und das zweite zu verspannende Element (1, 2) in entgegengesetzter Richtung treibende Betriebskraft oberhalb einer vorgegebenen Betriebskraftgrenze zur vollständigen Entlastung der Hülse (4) und zum Abheben der Hülse (4) von dem zweiten zu verspannenden Element (2) führt,
- wobei die Entlastung der Hülse (4) zum Sollbruch des Spannbolzens (3) führt.

7. Verfahren nach Anspruch 6, wobei eine den Spannbolzen (3) um ein vorgegebenes Maß streckende Kraft die Hülse (4) entgegengesetzt wirkend um ein geringeres Maß staucht.

## Claims

1. Bracing arrangement comprising overstrain protection with
- a first element (1) to be braced,
- a second element (2) to be braced, which is braced against the first element (1) and
- a clamping bolt (3) for bracing, the clamping bolt (3) being strained to its elastic limit up to a predetermined stress level (3f'),
- a sleeve (4), which is clamped against the second element (2) to be braced with the clamping bolt (3) and which passes through the first element (1) to be braced, and
- a sleeve tensioning device (5), which engages the sleeve (4) and clamps the first element (1) to be braced against the second element (2) to be braced,
in which
- the clamping bolt (3) is more elastic than the sleeve (4),
- the sleeve (4) is released through die sleeve tensioning device (5) up to a predetermined release extent (4f') and
- transgressing an operating force, which separates the first and the second element (1, 2) to be braced of each other, beyond a operating force limit leads to a full stress release of the sleeve (4) relative to the bracing by the clamping bolt (3) and
- the stress release of the sleeve (4) leads to a subsequent predetermined break of the clamping bolt (3).

2. Bracing arrangement according to claim 1, in which the sleeve (4) is more elastic than the first element (1) to be braced.

3. Bracing arrangement according to a preceding claim, in which the clamping bolt (3) is a screw bolt (3) with a screw thread (3a) to be screwed into a bore with an internal thread (2a) of the second element (2) to be braced.

4. Bracing arrangement according to a preceding claim, in which the sleeve (4) shows an external screw thread (4b) for screwing onto the sleeve tensioning device (5) containing an internal thread (5a).

5. Bracing arrangement according to a preceding claim, having provided a pre-determined breaking point at the clamping bolt.

6. Method for bracing two elements (1, 2) to be braced by means of a clamping bolt (3), a sleeve (4) and a sleeve tensioning device (5), especially with a bracing arrangement according to a preceding claim, with the steps:
- bracing of the sleeve (4) with the help of the clamping bolt (3) against the second (2) element to be braced, in which the clamping bolt (3) compresses the sleeve (4),
- bracing of the first element (1) to be braced to the second element (2) to be braced by bracing with the sleeve tensioning device (5), in which the sleeve tensioning device (5) with the sleeve(4), which goes through the first element (1) to be braced, comes into clamping engagement in such a way that the sleeve (4) is relaxed up to a predetermined release extent (4f') compared with the earlier compression,
- so that an operating force, which pushes first and the second element (1, 2) in opposite directions, above a predetermined operating force limit leads to full release of the sleeve (4) and to a raising of the sleeve (4) from the second element (2) to be braced,
- whereby the release of the sleeve (4) leads to predetermined break of the clamping bolt (3).

7. Method according to claim 6, in which a force, which is stretching the clamping bolt (3) to a predetermined extent, in an opposing manner compresses the sleeve (4) to a lesser extent.

## Revendications

1. Dispositif de mise en tension pourvu d'un limiteur de tension avec
- un premier élément à mettre en tension (1),
- un deuxième élément à mettre en tension (2), lequel est mis en tension contre le premier élément à mettre en tension (1), et
- un boulon de serrage (3) pour la mise en tension, le boulon de serrage (3) étant sollicité à sa limite élastique jusqu'à une cote de serrage (3f) prédéfinie,
- un manchon (4) qui est mis en tension avec le boulon de serrage (3) contre le deuxième élément à mettre en tension (2) et qui passe à travers le premier élément à mettre en tension (1), et
- un dispositif de serrage de manchon (5) qui est en prise avec le manchon (4) et serre le premier élément à mettre en tension (1) contre le deuxième élément à mettre en tension (2),
dans lequel
- le boulon de serrage (3) est plus flexible que le manchon (4),
- le manchon (4) est détendu par le dispositif de serrage de manchon (5) jusqu'à une cote de décharge (4f') prédéfinie et
- un dépassement d'une force d'utilisation séparant le premier et le deuxième élément à mettre en tension (1, 2) au-delà d'une limite de force d'utilisation entraîne une détente complète du manchon (4) relativement à la mise en tension par le boulon de serrage (3) et
- la détente du manchon (4) entraîne la rupture prescrite du boulon de serrage (3).

2. Dispositif de mise en tension selon la revendication 1, dans lequel le manchon (4) est plus flexible que le premier élément à mettre en tension (1).

3. Dispositif de mise en tension selon l'une des revendications précédentes, dans lequel le boulon de serrage (3) est un boulon fileté (3) avec un filetage (3a) pour le vissage dans un perçage avec filetage intérieur (2a) du deuxième élément à mettre en tension (2).

4. Dispositif de mise en tension selon l'une des revendications précédentes, dans lequel le manchon (4) présente un filetage extérieur (4b) pour le vissage du dispositif de serrage de manchon (5) portant un filetage intérieur (5a).

5. Dispositif de mise en tension selon l'une des revendications précédentes, dans lequel une zone de rupture prescrite (3e) est formée sur le boulon de serrage (3).

6. Procédé pour mettre en tension deux éléments à mettre en tension (1, 2) au moyen d'un boulon de serrage (3), d'un manchon (4) et d'un dispositif de serrage de manchon (5), en particulier au moyen d'un dispositif de mise en tension selon l'une des revendications précédentes, comportant les étapes suivantes :
- mise en tension du manchon (4) au moyen du boulon de serrage (3) contre le deuxième élément à mettre en tension (2), le boulon de serrage (3) refoulant le manchon (4),
- mise en tension du premier élément à mettre en tension (1) sur le deuxième élément à mettre en tension (2) par mise en tension avec le dispositif de serrage de manchon (5), le dispositif de serrage de manchon (5) entrant en prise de serrage avec le manchon (4) traversant le premier élément à mettre en tension (1) de façon que le manchon (4) soit détendu jusqu'à une cote de décharge (4f) prédéfinie par rapport au refoulement précédent,
- de sorte qu'une force d'utilisation entraînant le premier et le deuxième élément à mettre en tension (1, 2) en sens opposé au-delà d'une limite de force d'utilisation prédéfinie entraîne la décharge complète du manchon (4) et la séparation du manchon (4) du deuxième élément à mettre en tension (2),
- la décharge du manchon (4) entraînant la rupture prescrite du boulon de serrage (3).

7. Procédé selon la revendication 6, dans lequel une force étirant le boulon de serrage (3) d'une cote prédéfinie refoule le manchon (4) d'une cote plus faible en agissant en sens opposé.
